# EUROPÄISCHE PATENTANMELDUNG

(11) **EP 1 310 718 A1**
(43) Veröffentlichungstag der Anmeldung: **14.05.2003**
(21) Anmeldenummer: 01126816.6
(22) Anmeldetag: 10.11.2001
(51) Int. Cl.: F16L 13/02, F16L 58/18, F16L 59/20

(54) **Verfahren zum Herstellen von korrosionsgeschützten Verbindungsabschnitten von Rohrleitungen**

(71) Anmelder: Albrecht, Rainer, 45259 Essen (DE); Wlecklik, Manfred, 46117 Oberhausen (DE)
(72) Erfinder: Albrecht, Rainer, 45259 Essen (DE); Wlecklik, Manfred, 46117 Oberhausen (DE)
(74) Vertreter: Rohmann, Michael, Dr.

(57) **Zusammenfassung**

Verfahren zum Herstellen von korrosionsgeschützten Verbindungsabschnitten von Rohrleitungen, insbesondere von Industrie- und Versorgungsrohrleitungen. Die Rohrleitungen (3) weisen jeweils ein Mantelrohr (4) auf. Auf die zu verbindenden Mantelrohrenden wird eine die Mantelrohrenden überdeckende Verbindungsbeschichtung (14) aus Kunststoff aufgesprüht. Das Aufsprühen wird mit einer Sprühvorrichtung durchgeführt, in der zwei chemische Komponenten gemischt werden und mit der die resultierende Mischung auf die Mantelrohrenden aufgesprüht wird und dort als Verbindungsbeschichtung (14) aushärtet.

## Beschreibung

Die Erfindung betrifft ein Verfahren zum Herstellen von korrosionsgeschützten Verbindungsabschnitten von Rohrleitungen, insbesondere von Industrie- und Versorgungsrohrleitungen, wobei die Rohrleitungen jeweils ein Mantelrohr aufweisen. Das erfindungsgemäße Verfahren wird vorzugsweise bei Rohrleitungen angewendet, die als Fernwärmeleitungen eingesetzt werden.

Aus dem Stand der Technik ist ein Verfahren zum Herstellen von korrosionsgeschützten Verbindungsabschnitten von Verbundmantelrohren bekannt. Die Verbundmantelrohre bestehen aus einem Mantelrohr aus Kunststoff, normalerweise aus Polyethylen. Das Mantelrohr umgibt ein mediumführendes Innenrohr aus Stahl. Zwischen Mantelrohr und Innenrohr ist ein Zwischenraum vorgesehen, der von einem Isolierstoff ausgefüllt wird. In der Regel wird dieser Zwischenraum mit Polyurethanschaum ausgeschäumt. Zur Herstellung einer Verbindung bzw. eines Verbindungsabschnittes zwischen den Rohrenden zweier Verbundmantelrohre steht an den Rohrenden jeweils das Innenrohr etwas gegenüber dem Mantelrohr vor. Zwischen den Mantelrohrenden aus Kunststoff ist also ein Abstandsspalt vorgesehen, der zunächst keinen Isolierstoff bzw. Polyurethanschaum aufweist. Zur Herstellung der Verbindung werden zunächst die beiden Innenrohrenden aus Stahl miteinander verschweißt. Anschließend wird über den beiden Mantelrohrenden aus Kunststoff und über dem Abstandsspalt eine Schrumpfmuffe aus Kunststoff aufgeschoben. Die Muffenenden werden durch Erwärmung bzw. Erhitzung auf den Mantelrohrenden aufgeschrumpft. Die Schrumpfmuffe weist im Bereich des Abstandsspaltes in der Regel eine Einfüllöffnung sowie eine Entlüftungsöffnung auf. Durch die Einfüllöffnung wird dann der von der Schrumpfmuffe überdeckte Abstandsspalt mit Polyurethanschaum ausgeschäumt. Mit diesen Maßnahmen soll erreicht werden, dass die Verbindungsstelle zwischen den Rohrenden der Verbundmantelrohre ausreichend korrosionsgeschützt ist und insbesondere Feuchtigkeit nicht bis zum Innenrohr vordringen kann. Die mit dem bekannten Verfahren hergestellten Verbindungsabschnitte weisen jedoch beachtliche Nachteile auf. Die Schrumpfmuffe lässt sich oftmals nicht funktionssicher und exakt aufschrumpfen, so dass Undichtigkeiten resultieren können, die den Korrosionsschutz erheblich beeinträchtigen. Es hat sich auch gezeigt, dass häufig zumindest ein langfristiger Korrosionsschutz nicht gewährleistet ist. Der mit dem bekannten Verfahren hergestellte Verbindungsabschnitt lässt im Übrigen im Hinblick auf seine mechanische Resistenz stark zu wünschen übrig. Bereits bei relativ geringen mechanischen Beanspruchungen können Undichtigkeiten resultieren.

Demgegenüber liegt der Erfindung das technische Problem zugrunde, ein Verfahren der eingangs genannten Art anzugeben, mit dem Verbindungsabschnitte hergestellt werden können, die die oben genannten Nachteile nicht aufweisen, die sich insbesondere durch einen langfristigen funktionssicheren Korrosionsschutz auszeichnen und die eine hohe mechanische Widerstandsfähigkeit aufweisen.

Zur Lösung dieses technischen Problems lehrt die Erfindung ein Verfahren zum Herstellen von korrosionsgeschützten Verbindungsabschnitten von Rohrleitungen, insbesondere von Industrie- und Versorgungsrohrleitungen,
wobei die Rohrleitungen jeweils ein Mantelrohr aufweisen,
wobei auf die zu verbindenden Mantelrohrenden eine die Mantelrohrenden überdeckende Verbindungsbeschichtung aus Kunststoff aufgesprüht wird,
und wobei das Aufsprühen mit einer Sprühvorrichtung durchgeführt wird, in der zwei chemische Komponenten gemischt werden und mit der die resultierende Mischung auf die Mantelrohrenden aufgesprüht wird und dort als Verbindungsbeschichtung aushärtet. - Es liegt im Rahmen der Erfindung, dass die beiden zu mischenden chemischen Komponenten im flüssigen Zustand vorliegen. - Die Mantelrohre bestehen nach einer bevorzugten Ausführungsform aus Kunststoff. Grundsätzlich liegt es aber auch im Rahmen der Erfindung, dass ein Mantelrohr aus einem anderen Material, beispielsweise aus Metall oder Beton, bestehen kann.

Korrosionsgeschützter Verbindungsabschnitt meint, dass die zwischen den Mantelrohrenden hergestellte Verbindung ausreichend dicht ist und das Eindringen von Feuchtigkeit bzw. von korrosiven Medien in das Rohrinnere verhindert. Die Erfindung wird vorzugsweise bei im Erdreich verlegten bzw. im Erdreich zu verlegenden Rohrleitungen eingesetzt. Das erfindungsgemäße Verfahren eignet sich insbesondere für die Herstellung von Verbindungsabschnitten von Fernwärmerohrleitungen. Die Rohrleitungen bei denen das erfindungsgemäße Verfahren eingesetzt wird, haben in der Regel einen kreisförmigen Querschnitt. Grundsätzlich sind aber auch andere Rohrquerschnitte möglich.

Das erfindungsgemäße Verfahren wird insbesondere und vorzugsweise zur Herstellung von korrosionsgeschützten Verbindungsabschnitten von Verbundmantelrohren eingesetzt. Dabei handelt es sich um Rohre mit einem Innenrohr und einem dieses Innenrohr umgebenden Mantelrohr, wobei zweckmäßigerweise der zwischen Mantelrohr und Innenrohr vorgesehene Zwischenraum, der das Innenrohr umgibt, mit einem Isolierstoff ausgefüllt ist. Nach sehr bevorzugter Ausführungsform der Erfindung weisen also die zu verbindenden Rohrleitungen jeweils ein von dem Mantelrohr umgebenes mediumführendes Innenrohr auf und werden die Stirnenden zweier Innenrohrenden im Verbindungsabschnitt unmittelbar verbunden. Unmittelbare Verbindung der Innenrohrenden meint, dass diese Innenrohrenden ohne Zwischenschaltung weiterer Rohrelemente direkt miteinander verbunden werden. Die Innenrohre und die Innenrohrenden bestehen normalerweise aus Metall, vorzugsweise aus Stahl. Die unmittelbare Verbindung der Innenrohrenden erfolgt bevorzugt durch Schweißen. Das Mantelrohr besteht nach bevorzugter Ausführungsform der Erfindung aus einem Polyolefin, vorzugsweise aus Polyethylen. Der das Innenrohr umgebende und vom Mantelrohr überdeckte Zwischenraum der Verbundmantelrohre wird zweckmäßigerweise mit Polyurethan als Isolierstoff ausgeschäumt.

Es liegt im Rahmen der Erfindung, dass die beiden Innenrohrenden zweier zu verbindender Verbundmantelrohrenden gegenüber den Mantelrohrenden vorstehen und somit bei Verbindung der beiden Innenrohrenden ein Abstandsspalt zwischen den beiden Mantelrohrenden verbleibt. Nach sehr bevorzugter Ausführungsform der Erfindung ist ein solcher Abstandsspalt zwischen den Stirnenden der zu verbindenden Mantelrohrenden vorgesehen und wird in diesem Abstandsspalt zumindest ein die Mantelrohrenden fortsetzendes Stützschalenelement angeordnet, auf welches Stützschalenelement die Verbindungsbeschichtung aufgebracht wird. Das zumindest eine Stützschalenelement bildet in dem Abstandsspalt also gleichsam eine Brücke für die aufzubringende Verbindungsbeschichtung. Dass das Stützschalenelement die Mantelrohrenden fortsetzt meint, dass die Stützkonstruktion an die Mantelrohrenden anschließt und vorzugsweise den gleichen Durchmesser oder im Wesentlichen den gleichen Durchmesser wie die Mantelrohre aufweist. Nach einer bevorzugten Ausführungsform der Erfindung werden zumindest zwei Stützschalenelemente zu einer Stützschalenkonstruktion im Abstandsspalt kombiniert, wobei diese Stützschalenkonstruktion bevorzugt zylinderförmig ausgebildet ist. Wenn nach einer Ausführungsform der Erfindung zwei Stützschalenelemente verwendet werden, haben diese beiden Stützschalenelemente zweckmäßigerweise die gleiche Größe und vorzugsweise jeweils die Form eines Halbzylinders. Nach einer bevorzugten Ausführungsform der Erfindung werden Isolierstoffelemente, vorzugsweise Polyurethanelemente in den Abstandsspalt eingesetzt und bilden eine Brücke zwischen den Mantelrohrenden. Nach einer Ausführungsform werden zwei Isolierstoffhalbschalen, bevorzugt zwei Polyurethanhalbschalen in den Abstandsspalt eingesetzt und bilden die Brücke zwischen den Mantelrohrenden. Anschließend wird dann die Verbindungsbeschichtung aufgebracht. Die genannten Isolierstoffelemente, vorzugsweise Polyurethanelemente bilden dann zugleich die Isolierstoffschicht bzw. Polyurethanschaumschicht zwischen Verbindungsbeschichtung und Innenrohr.

Nach bevorzugter Ausführungsform der Erfindung wird die Verbindungsbeschichtung mit einer Dicke von 1 bis 5 mm, vorzugsweise mit einer Dicke von 2 bis 3 mm aufgebracht.

Nach sehr bevorzugter Ausführungsform, der im Rahmen der Erfindung ganz besondere Bedeutung zukommt, werden die beiden chemischen Komponenten im flüssigen Zustand unter Hochdruck in eine Mischkammer der Sprühvorrichtung eingeführt und die resultierende Mischung wird anschließend unmittelbar mit der Sprühvorrichtung aufgesprüht. Es liegt dabei im Rahmen der Erfindung, dass die Mischung der beiden chemischen Komponenten nach dem Gegenstrominjektionsprinzip durchgeführt wird. Es liegt weiterhin im Rahmen der Erfindung, dass mit einem Hochdruck von 100 bis 170 bar, vorzugsweise von 120 bis 160 bar gearbeitet wird. Als Sprühvorrichtung wird zweckmäßigerweise eine Sprühpistole bzw. Spritzpistole (Hochdruckspritzpistole) eingesetzt. Grundsätzlich liegt es im Rahmen der Erfindung, dass die aus der Polyurethantechnik bekannten Sprühvorrichtungen bzw. Spritzvorrichtungen eingesetzt werden können.

Die erfindungsgemäße Verbindungsbeschichtung wird also mit Hilfe eines Zwei-Komponentensystems hergestellt. Es liegt im Rahmen der Erfindung, dass die erste chemische Komponente eine amingruppenhaltige Verbindung ist und dass die zweite chemische Komponente eine isocyanatgruppenhaltige Verbindung ist. Die amingruppenhaltige Verbindung weist zweckmäßigerweise zumindest zwei Amingruppen auf. Insoweit liegt es im Rahmen der Erfindung zumindest ein Diamin, beispielsweise ein langkettiges Diamin als amingruppenhaltige Verbindung einzusetzen. Nach einer sehr bevorzugten Ausführungsform wird als amingruppenhaltige Verbindung alpha-(2-Aminomethylethyl)-omega-(2-aminomethylethoxy)-poly(oxy(methyl-1,2-ethandiyl) verwendet. Vorzugsweise wird eine aminhaltige Mischung eingesetzt, die zumindest 40 Gew.-%, zweckmäßigerweise über 50 Gew.-% der vorgenannten amingruppenhaltigen Verbindung enthält. - Die isocyanatgruppenhaltige Verbindung weist zweckmäßigerweise zumindest zwei Isocyanatgruppen auf. Als isocyanatgruppenhaltige Verbindung werden vorzugsweise Diisocyanate eingesetzt werden. Nach einer sehr bevorzugten Ausführungsform der Erfindung wird als isocyanatgruppenhaltige Verbindung Diphenylmethandiisocyanat verwendet. - Das Mischungsverhältnis der amingruppenhaltigen Verbindung zur isocyanatgruppenhaltigen Verbindung beträgt zweckmäßigerweise 1 : 1. Es liegt aber im Rahmen der Erfindung, dass das Mischungsverhältnis an der Sprühvorrichtung einstellbar ist. Es liegt fernerhin im Rahmen der Erfindung, dass die Mischung aus der amingruppenhaltigen Verbindung und der isocyanatgruppenhaltigen Verbindung, die aus der Sprühvorrichtung austritt, zu einem Polyharnstoff aushärtet. Eine Verbindungsbeschichtung aus Polyharnstoff hat sich besonders bewährt und zeichnet sich durch ganz beachtliche Vorteile aus. Erfindungsgemäß werden die Verhältnisse in der Mischung (insbesondere Art und Eigenschaften der chemischen Komponenten) so eingestellt, dass die aufgesprühte Mischung in einer Zeit von weniger als drei Sekunden, vorzugsweise in einer Zeit von weniger als 2,5 Sekunden aushärtet.

Nach einer sehr bevorzugten Ausführungsform der Erfindung wird vor dem Aufsprühen der Verbindungsbeschichtung auf jedes der beiden Mantelrohrenden eine über den Außenumfang des jeweiligen Mantelrohrendes umlaufende Dichtung aufgebracht und die Verbindungsbeschichtung wird dann auf diese Dichtungen aufgesprüht. Zweckmäßigerweise werden Dichtungsbänder für die Dichtungen an den Mantelrohrenden verwendet, die dann jeweils über den Außenumfang, zweckmäßigerweise über den gesamten Außenumfang des jeweiligen Mantelrohrendes umlaufen. Die Dichtung befindet sich dann also jeweils zwischen der Verbindungsbeschichtung und dem Mantelrohrende. Es liegt im Rahmen der Erfindung, für die Dichtung ein Dichtungsband auf Kautschukbasis einzusetzen. Mit den erfindungsgemäßen Dichtungen wird auf sehr effektive Weise verhindert, dass Feuchtigkeit in den von der Verbindungsbeschichtung überdeckten Abstandsspalt eindringen kann und zum Innenrohr gelangt.

Gemäß einer weiteren bevorzugten Ausführungsform der Erfindung werden die beiden Mantelrohrenden vor dem Aufbringen der Verbindungsbeschichtung erwärmt. Es hat sich gezeigt, dass bei einem solchen Vorwärmen der Mantelrohrenden eine besonders effektive Verbindung zwischen den Mantelrohrenden und der Verbindungsbeschichtung erreicht wird. Grundsätzlich liegt es im Rahmen der Erfindung, dass bei einem Vorwärmen der Mantelrohrenden auf das Aufbringen einer Dichtung auf das Mantelrohrende verzichtet werden kann. Nach einer Ausführungsform der Erfindung kann jedoch das Vorwärmen der Mantelrohrenden und ein Aufbringen einer Dichtung auf jedes der beiden Mantelrohrenden kombiniert werden.

Eingangs wurden die aus dem Stand der Technik bekannten Maßnahmen erläutert, bei denen über die beiden Mantelrohrenden aus Kunststoff und über den Abstandsspalt zwischen den Mantelrohrenden eine Schrumpfmuffe aufgeschoben wird. Grundsätzlich liegt es auch im Rahmen der Erfindung, über den beiden Mantelrohrenden und über dem Abstandsspalt eine zylinderförmige Hülse oder eine zylinderförmige Schrumpfmuffe aufzuschieben und dann die erfindungsgemäße Verbindungsbeschichtung auf die Hülse oder auf die Schrumpfmuffe und auf den Übergangsbereich zwischen Hülse bzw. Schrumpfmuffe und den Mantelrohrenden aufzubringen. Auch auf diese Weise kann eine sehr effektive Abdichtung erzielt werden.

Der Erfindung liegt die Erkenntnis zugrunde, dass mit dem erfindungsgemäßen Verfahren Verbindungsabschnitte von Rohrleitungen, insbesondere von Verbundmantelrohrleitungen hergestellt werden können, die sich gegenüber den aus dem Stand der Technik bekannten Verbindungsabschnitten durch sehr beachtliche Vorteile unterscheiden. Die erfindungsgemäß hergestellten Verbindungsabschnitte gewährleisten einen überraschend langfristigen Korrosionsschutz. Es kann ausgeschlossen werden, dass Feuchtigkeit bzw. korrosive Medien im Bereich der Verbindungsabschnitte zum Innenrohr vordringen. Von besonderer Bedeutung ist im Rahmen der Erfindung, dass sich die erfindungsgemäß hergestellten Verbindungsabschnitte durch eine überraschend hohe mechanische Widerstandsfähigkeit auszeichnen. Selbst bei stärkeren mechanischen Beanspruchungen können Undichtigkeiten nicht beobachtet werden und auch insoweit ist ein langfristiger Korrosionsschutz für die Verbindungsabschnitte gewährleistet. Die Verbindungsabschnitte sind weiterhin auch gegenüber Temperaturschwankungen unempfindlich. Zu betonen ist, dass die mit erfindungsgemäßen Verbindungsabschnitten versehenen Rohrleitungen sich einfach und problemlos im Erdreich verlegen lassen.

Nachfolgend wird die Erfindung anhand einer lediglich ein Ausführungsbeispiel darstellenden Zeichnung näher erläutert. Es zeigen in schematischer Darstellung:
- Fig. 1: einen ersten Verfahrensschritt des erfindungsgemäßen Verfahrens zur Herstellung eines Verbindungsabschnittes zwischen zwei Rohrenden,
- Fig. 2: einen zweiten Verfahrensschritt,
- Fig. 3: einen dritten Verfahrensschritt und
- Fig. 4: die beiden verbundenen Rohrenden mit dem fertigen Verbindungsabschnitt.

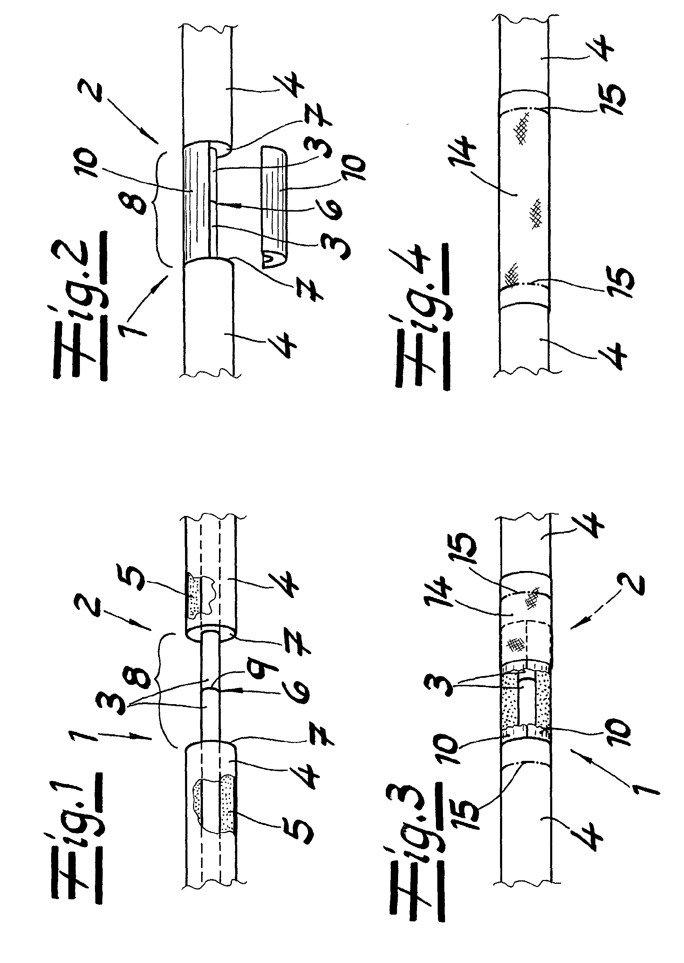

Die Fig. 1 zeigt zwei Rohrenden 1 und 2 zweier zu verbindender Verbundmantelrohre. Jedes Verbundmantelrohr besteht aus einem Innenrohr 3 aus Stahl sowie aus einem Mantelrohr 4 aus Kunststoff, beispielsweise aus Polyethylen. Die Verbundmantelrohrleitungen weisen im Zwischenraum zwischen dem Mantelrohr 4 und dem Innenrohr 3 eine Isolierung 5 auf, die vorzugsweise und im Ausführungsbeispiel aus einem Polyurethanschaum besteht. An den zu verbindenden Rohrenden 1, 2 der Verbundmantelrohrleitungen stehen die Innenrohrenden 6 gegenüber den Mantelrohrenden 7 und gegenüber der Isolierung 5 vor. Das führt dazu, dass zwischen den Mantelrohrenden 7 ein Abstandsspalt 8 gebildet ist. - In einem ersten Verfahrensschritt werden zunächst die vorstehenden Innenrohrenden 6 miteinander verbunden. Dies ist in Fig. 1 dargestellt. Hier wurden die aus Stahl bestehenden Innenrohrenden 6 miteinander verschweißt, so dass die Schweißstelle 9 resultiert.

In einem zweiten Verfahrensschritt (Fig. 2) wird dann der Abstandsspalt 8 zwischen den Mantelrohrenden 7 mit Stützschalenelementen überbrückt, die im Ausführungsbeispiel aus zwei Kunststoffhalbschalen 10 aus Polyurethan bestehen. Jede Kunststoffhalbschale 10 hat die Form eines Halbzylinders und beide Kunststoffhalbschalen 10 ergänzen sich zu einem Hohlzylinder, der die beiden miteinander verbundenen Innenrohrenden 6 formschlüssig aufnimmt. In Fig. 3 ist der Abstandsspalt 8 bereits von den Kunststoffhalbschalen 10 ausgefüllt. Dann wird die Verbindungsbeschichtung 14 mit einer nicht dargestellten Sprühvorrichtung sowohl auf die Kunststoffhalbschalen 10 als auch auf die Mantelrohrenden 7 aufgebracht. In Fig. 3 ist die Verbindungsbeschichtung 14 bereits teilweise aufgebracht worden. Wie oben bereits erläutert wurde tritt aus der Sprühvorrichtung eine flüssige Mischung aus zwei chemischen Komponenten aus, die im Ausführungsbeispiel auf den Mantelrohrenden 7 und auf den Kunststoffhalbschalen 10 zu der Verbindungsbeschichtung 14 aushärtet. Es liegt im Rahmen der Erfindung, dass diese Verbindungsbeschichtung 14 aus einem Polyharnstoff besteht. Vor dem Aufsprühen der Verbindungsbeschichtung 14 wird im Übrigen auf jedes der beiden Mantelrohrenden 7 eine über den Außenumfang des jeweiligen Mantelrohrendes 7 umlaufende Dichtung aufgebracht. Im Ausführungsbeispiel bestehen die Dichtungen aus Dichtungsbändern 15 die über den Außenumfang des jeweiligen Mantelrohrendes 7 umlaufen. Auf diese Dichtungsbänder 15 wird dann die Verbindungsbeschichtung 14 aufgesprüht.

Fig. 4 zeigt im Übrigen den fertiggestellten Verbindungsabschnitt der Verbundmantelrohrleitungen. Die Dichtungsbänder 15 wurden hier angedeutet.

## Patentansprüche

1. Verfahren zum Herstellen von korrosionsgeschützten Verbindungsabschnitten von Rohrleitungen, insbesondere von Industrie- und Versorgungsrohrleitungen,
wobei die Rohrleitungen jeweils ein Mantelrohr (4) aufweisen,
wobei auf die zu verbindenden Mantelrohrenden (7) eine die Mantelrohrenden (7) überdeckende Verbindungsbeschichtung (14) aus Kunststoff aufgesprüht wird
und wobei das Aufsprühen mit einer Sprühvorrichtung durchgeführt wird, in der zwei chemische Komponenten gemischt werden und mit der die resultierende Mischung auf die Mantelrohrenden (7) aufgesprüht wird und dort als Verbindungsbeschichtung aushärtet.

2. Verfahren nach Anspruch 1, wobei die zu verbindenden Rohrleitungen jeweils ein von dem Mantelrohr (4) umgebenes mediumführendes Innenrohr (3) aufweisen und wobei die Stirnenden zweier Innenrohrenden (6) im Verbindungsabschnitt unmittelbar verbunden werden.

3. Verfahren nach einem der Ansprüche 1 oder 2, wobei ein Abstandsspalt (8) zwischen den Stirnenden der zu verbindenden Mantelrohrenden (7) vorgesehen ist und wobei in diesem Abstandsspalt (8) zumindest ein die Mantelrohrenden (7) fortsetzendes Stützschalenelement angeordnet wird, auf welches Stützschalenelement die Verbindungsbeschichtung (14) aufgebracht wird.

4. Verfahren nach einem der Ansprüche 1 bis 3, wobei die Verbindungsbeschichtung (14) mit einer Dicke von 1 bis 5 mm, insbesondere mit einer Dicke von 2 bis 3 mm aufgebracht wird.

5. Verfahren nach einem der Ansprüche 1 bis 4, wobei die beiden chemischen Komponenten im flüssigen Zustand unter Hochdruck in eine Mischkammer der Sprühvorrichtung eingeführt werden und die resultierende Mischung anschließend unmittelbar mit der Sprühvorrichtung aufgesprüht wird.

6. Verfahren nach Anspruch 5, wobei mit einem Hochdruck von 100 bis 170 bar, vorzugsweise von 120 bis 160 bar gearbeitet wird.

7. Verfahren nach einem der Ansprüche 1 bis 6, wobei die erste chemische Komponente eine amingruppenhaltige Verbindung ist und wobei die zweite chemische Komponente eine isocyanatgruppenhaltige Verbindung ist.

8. Verfahren nach einem der Ansprüche 1 bis 7, wobei vor dem Aufsprühen der Verbindungsbeschichtung auf jedes der beiden Mantelrohrenden eine über den Außenumfang des jeweiligen Mantelrohrendes umlaufende Dichtung aufgebracht wird und wobei die Verbindungsbeschichtung auf die Dichtung aufgesprüht wird.
